# EUROPÄISCHE PATENTSCHRIFT

(11) **EP 1 002 622 B1**
(45) Veröffentlichungstag und Bekanntmachung des Hinweises auf die Patenterteilung: **23.06.2004**
(21) Anmeldenummer: 99122603.6
(22) Anmeldetag: 13.11.1999
(51) Int. Cl.: B23Q 1/76, B23K 26/08

(54) **Abstützeinrichtung für ein stangenartiges Werkstück an einer Bearbeitungsmaschine**
Support device for a rod-like workpiece on a machine tool
Dispositif pour le support d'une pièce en forme de barre sur une machine d'usinage

(30) Priorität: 20.11.1998 DE 29820779 U
(43) Veröffentlichungstag der Anmeldung: 24.05.2000
(73) Patentinhaber: TRUMPF Werkzeugmaschinen GmbH + Co. KG, 71254 Ditzingen (DE)
(72) Erfinder: Ruetz, Karsten, 69509 Mörlenbach-Weiher (DE)
(74) Vertreter: KOHLER SCHMID + PARTNER

(56) Entgegenhaltungen:
- FR-A- 923 640
- US-A- 4 018 115
- PATENT ABSTRACTS OF JAPAN vol. 008, no. 158 (M-311), 21. Juli 1984 (1984-07-21) & JP 59 053125 A (NIPPON KOKAN KK;OTHERS: 01), 27. März 1984 (1984-03-27)

## Beschreibung

Die Erfindung betrifft eine Abstützeinrichtung für ein stangenartiges Werkstück, insbesondere ein Metallrohr, an einer Bearbeitungsmaschine, wobei das Werkstück an der Bearbeitungsmaschine um eine in seiner Längsrichtung verlaufende Drehachse drehbar gehalten ist, mit wenigstens einem Stützkörper, der eine Aufnahme für das Werkstück aufweist, an deren Wandung das Werkstück in radialer Richtung abgestützt ist, wobei die Punkte der Werkstückabstützung in der senkrechten Projektion in eine Querschnittsebene des Werkstückes entlang eines mit der Drehachse des Werkstücks konzentrischen Umkreises angeordnet sind entsprechend dem Oberbegriff des Anspruchs 1, wie z.B. aus der US-A- 4018115 bekannt.

Aüßerdem bekannt ist eine Abstützeinrichtung mit einem Stützkörper, dessen Aufnahme für das Werkstück nach Art einer V-förmigen Nut ausgebildet ist. An den Nutflanken des vorbekannten Stützkörpers gleitend, läßt sich das betreffende Werkstück im Laufe der Bearbeitung um seine Längsachse drehen. Ohne weiteres kann eine funktionsgerechte Drehbewegung nur unter der Voraussetzung bewerkstelligt werden, daß das betreffende Werkstück einen Kreisquerschnitt aufweist. Die Abstützung von Werkstücken mit von der Kreisform abweichendem Querschnitt bedarf zusätzlicher Vorkehrungen. So sieht der Stand der Technik für diesen Fall kreisrunde Scheiben vor, die mit einem dem Querschnitt des zu bearbeitenden Werkstücks angepaßten Durchbruch versehen sind und in Längsrichtung des Werkstücks auf dieses aufgeschoben werden. In der V-förmigen Nut des Stützkörpers läßt sich das betreffende Werkstück dann mit der kreisförmigen Außenkontur der auf das Werkstück aufgeschobenen Scheibe lagern. Dementsprechend ist vor jeder Bearbeitung eines Werkstücks mit einem von der Kreisform abweichenden Querschnitt eine, bei Mehrfachabstützung mehrere Scheiben der vorstehend beschriebenen Art auf das betreffende Werkstück aufzubringen. Dieser Umstand macht eine automatisierte Werkstückbearbeitung schwierig, wenn nicht unmöglich.

Diesem Nachteil abzuhelfen, hat sich die vorliegende Erfindung zum Ziel gesetzt.

Erfindungsgemäß gelöst wird die genannte Aufgabe dadurch, daß im Falle einer gattungsgemäßen Abstützeinrichtung die Wandungen der Aufnahmeteile in der senkrechten Projektion in die Querschnittsebene des Werkstücks mit einem Radius ausgebildet sind, welcher dem Radius des Umkreises des Werkstückes entspricht. Die mehrteilige Ausbildung des Stützkörpers sowie die beschriebene Relativbeweglichkeit der Stützkörperteile schaffen die Möglichkeit, den Stützkörper in radialer Richtung des Werkstücks zu öffnen und auf das Werkstück aufzusetzen, ohne daß zu diesem Zweck eine Relativbewegung von Stützkörper bzw. Stützkörperteilen und Werkstück in axialer Richtung des Werkstücks erforderlich wäre. Die Automatisierung des Werkstückwechsels und somit des gesamten Bearbeitungsvorgangs gestaltet sich folglich sehr einfach. Im gleichen Sinne wirkt sich der Umstand aus, daß die Stützkörperteile mit Aufnahmeteilen die Aufnahme für das Werkstück ausbilden und daß dementsprechend beim Werkstückwechsel kein separates, mit einer Aufnahme für das Werkstück versehenes Bauteil zu handhaben ist. Eine Vereinfachung des automatisierten Werkstückwechsels ergibt sich schließlich auch aufgrund der erfindungsgemäßen Ausbildung der Wandungen der Aufnahmeteile an den Stützkörperteilen. So läßt sich erfindungsgemäß ein und derselbe Stützkörper zur Lagerung einer Vielzahl von Werkstücken mit voneinander verschiedenen Querschnittsformen verwenden. Voraussetzung für eine funktionsfähige Abstützung der zu bearbeitenden Werkstücke ist lediglich, daß deren radiale Abstützung an dem erfindungsgemäßen Stützkörper entlang eines mit ihrer Drehachse konzentrischen Umkreises erfolgt, dessen Radius mit dem Radius der Wandungen an den Aufnahmeteilen der Stützkörperteile in etwa übereinstimmt. Beispielsweise ist es möglich, ein und denselben erfindungsgemäßen Stützkörper gleichermaßen für Werkstücke mit Kreis-, Rechteck- oder Sternquerschnitt einzusetzen. Der an einer erfindungsgemäßen Abstützeinrichtung einmal verwendete Stützkörper kann folglich nur selten gegen einen anderen Stützkörper auszutauschen sein. Stützkörperwechsel, die einen automatisierten Bearbeitungsablauf stören würden, können auf wenige Fälle beschränkt bleiben.

Einer Automatisierung der Werkstückbearbeitung dient auch das in Anspruch 2 angegebene Merkmal der erfindungsgemäßen Abstützeinrichtung. Im Falle der beschriebenen Variante der Erfindung kann nämlich der betreffende Stützkörperteil für die Werkstückzufuhr bzw. für die Werkstückentnahme an der Bearbeitungsstation der Bearbeitungsmaschine genutzt werden.

Die Rolle, wie sie gemäß Anspruch 3 im Falle einer weiteren Ausführungsform der erfindungsgemäßen Abstützeinrichtung als Stützkörperteil vorgesehen ist, erlaubt eine reibungsarme Axialverschiebung des Werkstückes gegenüber dem Stützkörper, beispielsweise bei axialer Justierung des Werkstückes gegenüber der zugeordneten Bearbeitungsstation und/oder bei bearbeitungsbedingten axialen Ausweichbewegungen des Werkstückes.

Für den Fall, daß Werkstücke mit Umkreisen unterschiedlicher Radien gelagert werden müssen, sind im Falle bevorzugter Ausführungsformen der erfindungsgemäßen Abstützeinrichtung die kennzeichnenden Merkmale der Ansprüche 4 bzw. 5 vorgesehen. Gemäß Anspruch 4 lassen sich durch eine einfache Einstell-Drehbewegung um die Drehachse des betreffenden Stützkörperteils Aufnahmeteile mit unterschiedlichen Wandungsradien in Arbeitsstellung überführen. Eine ähnlich einfache Anpassung des Stützkörpers an wechselnde Radien des Umkreises an den zu lagernden Werkstücken erlaubt die in Anspruch 5 beschriebene, um ihre Drehachse drehend einstellbare Rolle. Bei entsprechender Variation des Radius' der Wandung der Hohlkehle in Rollen-Einstellrichtung wird eine stufenlose Einstellung des Wandungsradius' und somit eine stufenlose Anpassung des gesamten Stützkörpers an wechselnde Werkstückkonturen bzw. -umkreisradien möglich.

Die in Anspruch 6 beschriebene Programmsteuerung der Stützkörperteile dient der Automatisierung der Werkstückbearbeitung.

Nachstehend wird die Erfindung anhand schematischer Darstellungen zu Ausführungsbeispielen näher erläutert. Es zeigen:
- Figur 1: eine erste Ausführungsform einer Abstützeinrichtung an einer Bearbeitungsmaschine,
- Figur 2: eine zweite Ausführungsform einer Abstützeinrichtung,
- Figur 3: die Abstützeinrichtung nach Figur 2 beim Ausschleusen eines bearbeiteten Werkstückes,
- Figuren 4 und 5: eine dritte Ausführungsform einer Abstützeinrichtung mit unterschiedlichen Einstellungen,
- Figur 6: einen der Stützkörperteile der Abstützeinrichtung nach den Figuren 4 und 5 in Einzeldarstellung und
- Figur 7: einen Stützkörperteil einer vierten Ausführungsform einer Abstützeinrichtung in Einzeldarstellung.

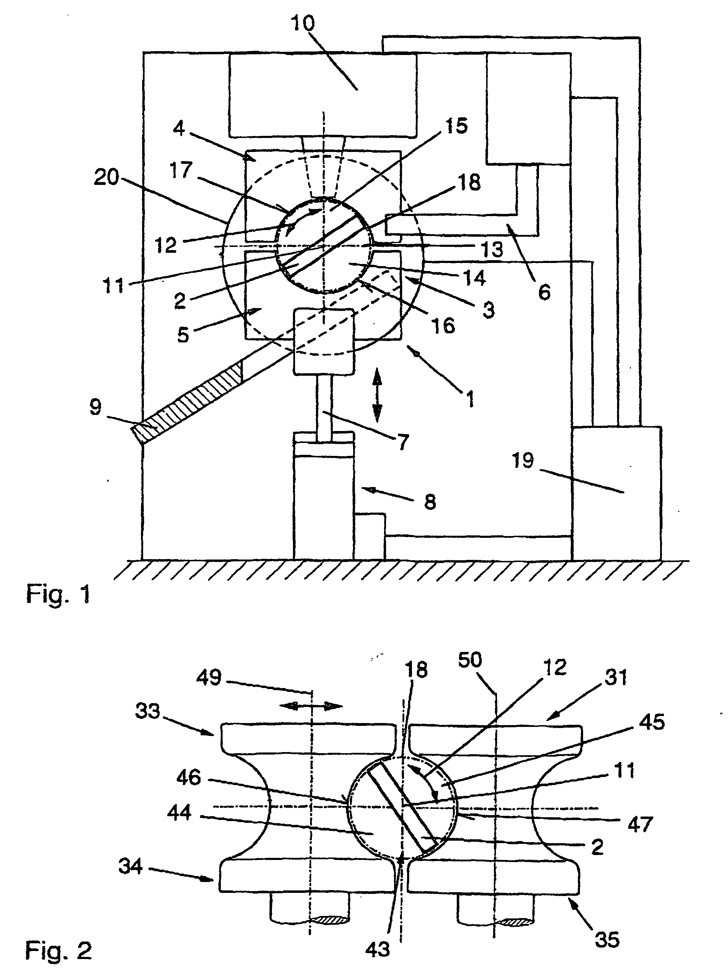

Ausweislich Figur 1 umfaßt eine Abstützeinrichtung 1 für ein stangenartiges Werkstück, vorliegend ein Metallrohr 2 mit Rechteckquerschnitt, einen Stützkörper 3, bestehend aus einem oberen Stützkörperteil 4 und einem unteren Stützkörperteil 5. Der obere Stützkörperteil 4 ist, wie angedeutet, an dem Gestell einer Bearbeitungsmaschine 6 befestigt. Der untere Stützkörperteil 5 ist mit einer Kolbenstange 7 einer Kolben-Zylinder-Einheit 8 verbunden. An der dem Betrachter abgewandten Seite der Abstützeinrichtung 1 ist eine Rutsche 9 zum Ausschleusen des Werkstücks 2 nach dessen Bearbeitung vorgesehen. Bearbeitet wird das Werkstück 2 mittels einer Bearbeitungsstation in Form eines Laserschneidkopfes 10 der Bearbeitungsmaschine 6.

Im Laufe des Bearbeitungsvorgangs ist das Werkstück 2 mittels des Laserschneidkopfes 10 an verschiedenen Umfangsflächen zu bearbeiten. Damit die betreffenden Umfangsflächen des Werkstükkes 2 für den Laserschneidkopf 10 zugänglich sind, ist das Werkstück 2 an seinen beiden axialen Enden auf bekannte Art und Weise in den Spannfuttern zweier Drehvorrichtungen 20 der Bearbeitungsmaschine 6 eingespannt und mittels dieser um eine in Figur 1 senkrecht zu der Zeichenebene verlaufende Drehachse 11 in Richtung eines Doppelpfeils 12 drehbar. Von den beiden Drehvorrichtungen 20 ist in Figur 1 eine erkennbar. Die Abstützeinrichtung 1 ist in axialer Richtung des Werkstücks 2 gesehen zwischen den Spannfuttern der Drehvorrichtungen 20 an der Bearbeitungsmaschine 6 angeordnet und verhindert ein Durchbiegen des Werkstückes 2. Zu diesem Zweck durchsetzt das Werkstück 2 eine Aufnahme 13 an dem Stützkörper 3.

Die Aufnahme 13 für das Werkstück 2 wird gebildet von Aufnahmeteilen 14, 15 an den Stützkörperteilen 4, 5. Wandungen 16, 17 der Aufnahmeteile 14, 15 verlaufen - in der senkrechten Projektion in eine mit der Zeichenebene von Figur 1 übereinstimmende Querschnittsebene des Werkstückes 2 - kreisbogenartig um einen gedachten gemeinsamen Mittelpunkt, der durch die Drehachse 11 des Werkstückes 2 definiert wird. In ihrem Verlauf fallen die Wandungen 16, 17 zusammen mit einem in Figur 1 strichpunktiert angedeuteten Umkreis 18 der Drehachse 11 des Werkstückes 2. Auf dem Umkreis 18 angeordnet sind die vier Ecken des Rechteckquerschnittes des Werkstückes 2. An diesen Ecken stützt sich das Werkstück 2 in radialer Richtung an den Wandungen 16, 17 der Aufnahmeteile 14, 15 an den Stützkörperteilen 4, 5 ab. Aufgrund der beschriebenen geometrischen Verhältnisse läßt sich das Werkstück 2 unter Abstützung an dem Stützkörper 3 mittels der Drehvorrichtungen 20 an der Bearbeitungsmaschine 6 um seine Drehachse 11 in jede beliebige Drehstellung drehen. In der jeweils eingenommenen Drehstellung wird das Werkstück 2 mittels der Drehvorrichtungen 20 gehalten.

Zur Vorbereitung des Bearbeitungsvorganges ist das Werkstück 2 zunächst der Bearbeitungsmaschine 6 zuzuführen. Dabei ist der untere Stützkörperteil 5 anfänglich mittels der Kolben-Zylinder-Einheit 8 in radialer Richtung des Werkstücks 2 relativ zu dem oberen Stützkörperteil 4 in seine untere Ruhestellung verfahren und folglich bei geöffnetem Stützkörper 3 mit verhältnismäßig großem Abstand von dem oberen Stützkörperteil 4 angeordnet. Anschließend wird das Werkstück 2 an seinen axialen Enden in den Spannfuttern der maschinenseitigen Drehvorrichtungen 20 eingespannt und durchragt dann den Zwischenraum zwischen den Stützkörperteilen 4, 5. Nun kann der untere Stützkörperteil 5 mittels der Kolben-Zylinder-Einheit 8 nach oben in seine Arbeitsstellung gemäß Figur 1 verfahren werden. In dieser Lage wird der Stützkörperteil 5 während der Bearbeitung des Werkstücks 2 mittels der Kolben-Zylinder-Einheit 8 gehalten. Nach Beendigung der anschließenden schneidenden Bearbeitung des Werkstückes 2 mittels des Laserschneidkopfes 10 wird die Einspannung der axialen Enden des Werkstückes 2 gelöst und danach der untere Stützkörperteil 5 mit dem von diesem untergriffenen Werkstück 2 abgesenkt. Während dieser Absenkbewegung wird das Werkstück 2 auf die Rutsche 9 übergeben, über welche es dann aus dem Nahbereich der Bearbeitungsmaschine 6 ausgeschleust wird. Gesteuert wurden die vorstehenden Abläufe, insbesondere die beschriebenen Funktionen der Abstützeinrichtung 1 des Laserschneidkopfes 10 sowie der Drehvorrichtungen 20 mittels einer Computersteuerung 19 der Bearbeitungsmaschine 6.

Gemäß Figur 2 ist das Werkstück 2 an einer Abstützeinrichtung 31 gelagert, die einen Stützkörper 33 aufweist. Dieser besteht aus Stützkörperteilen 34, 35 in Form von Rollen, welche um Rollen-Drehachsen 49, 50 drehbar sind. Die Rollen-Drehachsen 49, 50 liegen in der mit der Zeichenebene von Figur 2 zusammenfallenden Querschnittsebene des Werkstücks 2. Jede der Rollen 34, 35 ist mit einer in ihren Mantel eingesenkten Hohlkehle 44, 45 versehen, die sich jeweils über den gesamten Rollenumfang erstreckt. Bei den Hohlkehlen 44, 45 handelt es sich um Aufnahmeteile, die zusammengenommen eine Aufnahme 43 des Stützkörpers 33 bilden. Wandungen 46, 47 der Hohlkehlen 44, 45 sind in der gezeigten senkrechten Projektion in die Querschnittsebene des Werkstücks 1 mit einem Radius ausgebildet, welcher dem Radius des Umkreises 18 an dem Werkstück 2 entspricht. Anders als die Stützkörperteile 4, 5 nach Figur 1 sind die Rollen 34, 35 gemäß Figur 2 in horizontaler Richtung relativ zueinander beweglich. Aufgrund ihrer Drehbarkeit um die Rollen-Drehachsen 49, 50 sowie aufgrund des Umstandes, daß die Wandungen 46, 47 der Hohlkehlen 44, 45 in Drehrichtung der Rollen 34, 35 einen gleichbleibenden Radius aufweisen, können sich die Rollen 34, 35 bei etwaigen axialen Bewegungen des Werkstücks 2 drehen und erlauben dann eine reibungsarme Verlagerung des im Innern der Aufnahme 43 gehaltenen Werkstücks 2 in Achsrichtung.

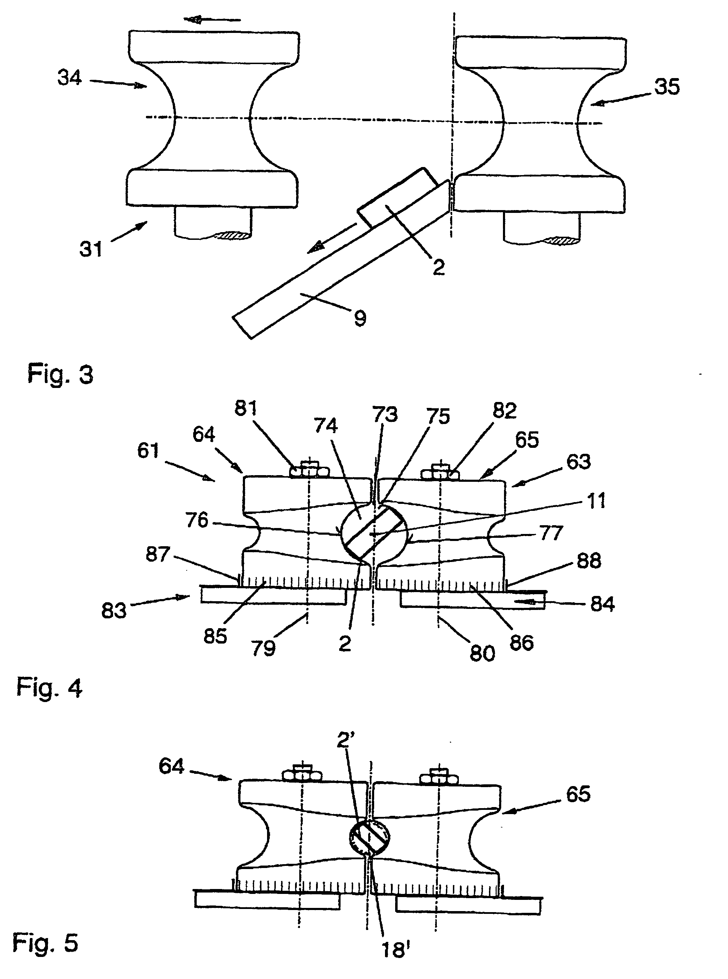

Wie Figur 3 zeigt, kann auch die Abstützeinrichtung 31 mit einer Rutsche 9 zum Ausschleusen des bearbeiteten Werkstückes 2 kombiniert werden.

Gemäß den Figuren 4 und 5 macht eine Abstützeinrichtung 61 Gebrauch von einem Stützkörper 63 bestehend aus zwei Stützkörperteilen in Form von Rollen 64, 65. Letztere sind um Rollen-Drehachsen 79, 80 drehend einstellbar und in der jeweils eingestellten Drehstellung mittels Feststellvorrichtungen 81, 82 durch axiales Verspannen gegen ein Widerlager fixierbar. Gemäß Figur 4 setzt sich eine Aufnahme 73 für das Werkstück 2 zusammen aus Aufnahmeteilen 74, 75, die ihrerseits von entsprechenden Hohlkehlen gebildet werden. Die Hohlkehlen bzw. Aufnahmeteile 74, 75 sind in den Mantel der jeweiligen Rolle 64, 65 eingesenkt und erstrecken sich jeweils über einen großen Teil des Rollenumfangs. Wandungen 76, 77 der Hohlkehlen 74, 75 sind mit in der Einstellrichtung der Rollen 64, 65 variablen Radien ausgebildet. Durch Einstellen der Rollen 64, 65 um die Rollen-Drehachse 79, 80 läßt sich folglich der Radius bzw. der Durchmesser der Aufnahme 73 verändern. Gemäß Figur 4 bilden die Wandungen 76, 77 der Hohlkehlen 74, 75 die Aufnahme 73 mit einem Radius aus, welcher dem Radius des Umkreises 18 des Werkstückes 2 entspricht.

In Figur 5 sind die Rollen 64, 65 in Drehstellungen gezeigt, in welchen sich die Wandungen 76, 77 der Hohlkehlen 74, 75 mit minimalem Radius in der Querschnittsebene eines Werkstückes 2' gegenüberliegen. In diesem Fall entspricht der Radius der Wandungen 76, 77 an den Hohlkehlen 74, 75 dem Radius eines Umkreises 18' des Werkstückes 2'.

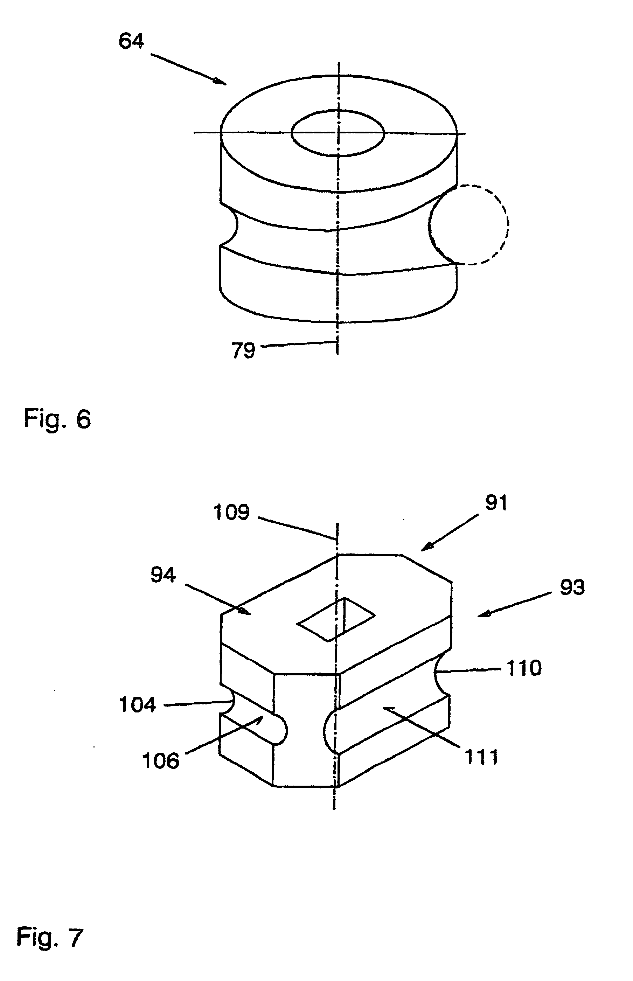

In den Figuren 4 und 5 angedeutet sind Anzeigeeinrichtungen 83, 84, anhand derer die von den Rollen 64, 65 eingenommene DrehStellung und damit der eingestellte Radius der Aufnahme 73 erkennbar ist. Rollenseitig umfassen die Anzeigeeinrichtungen 83, 84 in Einstellrichtung der Rollen 64, 65 gegeneinander versetzte Markierungen 85, 86. Diesen zugeordnet sind Zeiger 87, 88. Figur 6 zeigt die Rolle 64 der Figuren 4 und 5 in Einzeldarstellung.

Ebenso wie die Rollen 34, 35 sind auch die Rollen 64, 65 in horizontaler Richtung relativ zueinander beweglich. Durch entsprechende Relativbewegung der Rollen 64, 65 in radialer Richtung des Werkstückes 2, 2' kann bei einem Werkstückwechsel das bearbeitete Werkstück 2, 2' freigegeben bzw. das zu bearbeitende Werkstück 2, 2' umschlossen werden.

Figur 7 schließlich zeigt einen Stützkörperteil 94, der gemeinsam mit einem nicht dargestellten entsprechenden Stützkörperteil einen Stützkörper 93 einer Abstützeinrichtung 91 bildet. Dabei ist der Stützkörperteil 94 um eine Stützkörperteil-Drehachse 109 drehend einstellbar und in gleicher Weise wie die Rollen 64, 65 gemäß den Figuren 4 und 5 in der jeweils eingestellten Drehstellung fixierbar. An achsparallelen Mantelflächen weist der Stützkörperteil 94 in Einstellrichtung gegeneinander versetzte Aufnahmeteile 104, 110 auf, wobei Wandungen 106, 111 mit unterschiedlichen Radien ausgebildet sind. Der dem Stützkörperteil 94 zugeordnete zweite Stützkörperteil ist entsprechend gestaltet, so daß durch Einstellen der beiden Stützkörperteile um die jeweilige Stützkörperteil-Drehachse eine Anpassung der Abstützeinrichtung 91 an zwei verschiedene Werkstück-Umkreisradien bzw. -durchmesser vorgenommen werden kann. In Aufbau und Funktionsweise entspricht die Abstützeinrichtung 91 im übrigen den vorstehend ausführlich beschriebenen Abstützeinrichtungen 1, 31, 61.

## Patentansprüche

1. Abstützeinrichtung für ein stangenartiges Werkstück (2, 2'), insbesondere ein Metallrohr, an einer Bearbeitungsmaschine (6), wobei das Werkstück (2, 2') an der Bearbeitungsmaschine (6) um eine in seiner Längsrichtung verlaufende Drehachse (11) drehbar gehalten ist, mit wenigstens einem Stützkörper (3, 33, 63, 93), der eine Aufnahme (13, 43, 73) für das Werkstück (2, 2') aufweist, an deren Wandung das Werkstück (2, 2') in radialer Richtung abgestützt ist, wobei die Punkte der Werkstückabstützung in der senkrechten Projektion in eine Querschnittsebene des Werkstückes (2, 2') entlang eines mit der Drehachse (11) des Werkstückes (2, 2') konzentrischen Umkreises (18, 18') angeordnet sind, wobei der Stützkörper (3, 33, 63, 93) mehrteilig ausgebildet ist mit wenigstens zwei Stützkörperteilen (4, 5; 34, 35; 64, 65; 94), die in radialer Richtung des Werkstücks (2, 2') relativ zueinander beweglich sind und mit Aufnahmeteilen (14, 15; 44, 45; 74, 75; 104, 110) die Aufnahme (13, 43, 73) für das Werkstück (2, 2') ausbilden, **dadurch gekennzeichnet, daß** die Wandungen (16, 17; 46, 47; 76, 77; 106, 111) der Aufnahmeteile (14, 15; 44, 45; 74, 75; 104, 110) in der senkrechten Projektion in die Querschnittsebene des Werkstücks (2, 2') mit einem Radius ausgebildet sind, welcher dem Radius des Umkreises (18, 18') des Werkstückes (2, 2') entspricht.

2. Abstützeinrichtung nach Anspruch 1, **dadurch gekennzeichnet, daß** wenigstens einer (5) der Stützkörperteile (4, 5) das Werkstück (2) untergreift und gemeinsam mit diesem relativ zu einer Bearbeitungsstation (10) der Bearbeitungsmaschine (6) bewegbar ist.

3. Abstützeinrichtung nach einem der vorhergehenden Ansprüche, **dadurch gekennzeichnet, daß** wenigstens einer der Stützkörperteile (34, 35) als Rolle ausgebildet ist, die um eine in einer Querschnittsebene des Werkstücks (2) verlaufende Rollen-Drehachse (49, 50) drehbar ist sowie eine in ihren Mantel eingesenkte und den Aufnahmeteil (44, 45) der Rolle bildende Hohlkehle aufweist, die in Rollen-Drehrichtung über wenigstens einen Teil des Rollenumfangs verläuft und deren Wandung (46, 47) wenigstens teilweise mit in Rollen-Drehrichtung gleichbleibendem Radius ausgebildet ist.

4. Abstützeinrichtung nach einem der vorhergehenden Ansprüche, **dadurch gekennzeichnet, daß** wenigstens einer (94) der Stützkörperteile um eine Stützkörperteil-Drehachse (109) drehend einstellbar ist und in Einstellrichtung gegeneinander versetzte Aufnahmeteile (104, 110) aufweist, deren Wandungen (106, 111) mit unterschiedlichen Radien ausgebildet sind.

5. Abstützeinrichtung nach einem der vorhergehenden Ansprüche, **dadurch gekennzeichnet, daß** wenigstens einer der Stützkörperteile (64, 65) als Rolle ausgebildet ist, die um eine in einer Querschnittsebene des Werkstücks (2, 2') verlaufende Rollen-Drehachse (79, 80) drehend einstellbar ist sowie eine in ihren Mantel eingesenkte und den Aufnahmeteil (74, 75) der Rolle bildende Hohlkehle aufweist, die in Rollen-Einstellrichtung über wenigstens einen Teil des Rollenumfangs verläuft und deren Wandung (76, 77) wenigstens teilweise mit in Rollen-Einstellrichtung veränderlichem Radius ausgebildet ist.

6. Abstützeinrichtung nach einem der vorhergehenden Ansprüche, **dadurch gekennzeichnet, daß** die Stützkörperteile (4, 5; 34, 35; 64, 65; 94) programmgesteuert relativ zueinander beweglich und/oder um die Stützkörperteil- (109) bzw. Rollen-Drehachse (79, 80) drehend einstellbar sind.

## Claims

1. Support device for a rod-like workpiece (2, 2'), in particular a metal tube, on a working machine (6), wherein the workpiece (2, 2') is held on the working machine (6) so as to be rotatable about a rotational axis (11) extending in its longitudinal direction, with at least one support body (3, 33, 63, 93) which comprises a receptacle (13, 43, 73) for the workpiece (2, 2'), at the wall of which receptacle the workpiece (2, 2') is supported in the radial direction, wherein the points of the workpiece support are disposed in the vertical projection into a cross-sectional plane of the workpiece (2, 2') along a circumference (18, 18') which is concentric with the rotational axis (11) of the workpiece (2, 2'), wherein the support body (3, 33, 63, 93) is formed in multiple parts with at least two support body parts (4, 5; 34, 35; 64, 65; 94), which can move relative to one another in the radial direction of the workpiece (2, 2'), and with receptacle parts (14, 15; 44, 45; 74, 75; 104, 110) which form the receptacle (13, 43, 73) for the workpiece (2, 2'), **characterised in that** the walls (16, 17; 46, 47; 76, 77; 106, 111) of the receptacle parts (14, 15; 44, 45; 74, 75; 104, 110) are formed in the vertical projection into the cross-sectional plane of the workpiece (2, 2') with a radius which corresponds to the radius of the circumference (18, 18') of the workpiece (2, 2').

2. Support device according to Claim 1, **characterised in that** at least one (5) of the support body parts (4, 5) engages under the workpiece (2) and can move together with this relative to a working station (10) of the working machine (6).

3. Support device according to any one of the preceding Claims, **characterised in that** at least one of the support body parts (34, 35) is formed as a roller which can rotate about a rotational axis (49, 50), extending in a cross-sectional plane of the workpiece (2), of the roller and comprises a channel which is sunk into its circumferential surface, forms the receptacle part (44, 45) of the roller, extends in the rotational direction of the roller over at least a part of the roller circumference and the wall (46, 47) of which is formed at least in part with a radius which is constant in the rotational direction of the roller.

4. Support device according to any one of the preceding Claims, **characterised in that** at least one (94) of the support body parts can be adjusted in rotatable fashion about a rotational axis (109) of the support body part and comprises receptacle parts (104, 110) which are staggered in the direction of adjustment and the walls (106, 111) of which are formed with different radii.

5. Support device according to any one of the preceding Claims, **characterised in that** at least one of the support body parts (64, 65) is formed as a roller which can be adjusted in rotatable fashion about a rotational axis (79, 80), extending in a cross-sectional plane of the workpiece (2, 2'), of the roller and comprises a channel which is sunk into its circumferential surface, forms the receptacle part (74, 75) of the roller, extends in the direction of adjustment of the roller over at least a part of the roller circumference and the wall (76, 77) of which is formed at least in part with a radius which is variable in the direction of adjustment of the roller.

6. Support device according to any one of the preceding Claims, **characterised in that** by program control the support body parts (4, 5; 34, 35; 64, 65; 94) can move relative to one another and/or can be adjusted in rotatable fashion about the rotational axis (109) of the support body part or the rotational axis (79, 80) of the roller.

## Revendications

1. Dispositif assurant l'appui, dans une machine d'usinage (6), d'une pièce (2, 2') en forme de barre et notamment d'un tube métallique, ladite pièce (2, 2') étant retenue à rotation sur ladite machine d'usinage (6), autour d'un axe de rotation (11) s'étendant dans sa direction longitudinale, comprenant au moins un corps d'appui (3, 33, 63, 93) muni d'un logement (13, 43, 73) destiné à la pièce (2, 2'), contre la paroi duquel ladite pièce (2, 2') est en appui dans la direction radiale, sachant que les points d'appui de la pièce sont situés, en projection verticale dans un plan de section transversale de ladite pièce (2, 2'), le long d'une circonférence (18, 18') concentrique à l'axe de rotation (11) de la pièce (2, 2'), ledit corps d'appui (3, 33, 63, 93) étant réalisé en plusieurs parties, comprenant au moins deux parties (4, 5 ; 34, 35 ; 64, 65 ; 94) qui sont mobiles l'une par rapport à l'autre dans la direction radiale de la pièce (2, 2'), et qui comportent des parties réceptrices (14, 15 ; 44, 45 ; 74, 75 ; 104, 110) matérialisant le logement (13, 43, 73) affecté à la pièce (2, 2'), **caractérisé par le fait que** les parois (16, 17 ; 46, 47 ; 76, 77 ; 106, 111) desdites parties réceptrices (14, 15 ; 44, 45 ; 74, 75 ; 104, 110) sont réalisées, en projection verticale dans le plan de section transversale de la pièce (2, 2'), avec un rayon correspondant au rayon de la circonférence (18, 18') de ladite pièce (2, 2').

2. Dispositif d'appui selon la revendication 1, **caractérisé par le fait qu'**au moins l'une (5) des parties (4, 5) du corps d'appui emprisonne la pièce (2) par-dessous et est mobile, conjointement à cette dernière, vis-à-vis d'un poste d'usinage (10) de la machine d'usinage (6).

3. Dispositif d'appui selon l'une des revendications précédentes, **caractérisé par le fait qu'**au moins l'une des parties (34, 35) du corps d'appui est réalisée sous la forme d'un rouleau pouvant tourner autour d'un axe de rotation (49, 50) s'étendant dans un plan de section transversale de la pièce (2), ledit rouleau étant doté d'une dépouille qui est encaissée dans son enveloppe, matérialise la partie réceptrice (44, 45) dudit rouleau, s'étend sur au moins une partie du pourtour dudit rouleau dans la direction de rotation dudit rouleau, et dont la paroi (46, 47) est au moins partiellement réalisée avec un rayon constant dans la direction de rotation dudit rouleau.

4. Dispositif d'appui selon l'une des revendications précédentes, **caractérisé par le fait qu'**au moins l'une (94) des parties du corps d'appui est réglable en rotation autour d'un axe de rotation (109), et comporte des parties réceptrices (104, 110) mutuellement décalées dans la direction du réglage, et dont les parois (106, 111) sont réalisées avec des rayons différents.

5. Dispositif d'appui selon l'une des revendications précédentes, **caractérisé par le fait qu'**au moins l'une des parties (64, 65) du corps d'appui est réalisée sous la forme d'un rouleau réglable en rotation autour d'un axe de rotation (79, 80) s'étendant dans un plan de section transversale de la pièce (2, 2'), ledit rouleau étant doté d'une dépouille qui est encaissée dans son enveloppe, matérialise la partie réceptrice (74, 75) dudit rouleau, s'étend sur au moins une partie du pourtour dudit rouleau dans la direction du réglage dudit rouleau, et dont la paroi (76, 77) est au moins partiellement réalisée avec un rayon variable dans la direction du réglage dudit rouleau.

6. Dispositif d'appui selon l'une des revendications précédentes, **caractérisé par le fait que** les parties (4, 5 ; 34, 35 ; 64, 65 ; 94) du corps d'appui sont douées de mobilité relative par commande programmée, et/ou sont respectivement réglables en rotation autour de l'axe de rotation (109) des parties du corps d'appui, ou autour de l'axe de rotation (79, 80) du rouleau.
